# EUROPEAN PATENT SPECIFICATION

(11) **EP 3 828 017 B1**
(45) Date of publication and mention of the grant of the patent: **03.01.2024**
(21) Application number: 19211599.6
(22) Date of filing: 26.11.2019
(51) Int. Cl.: B60H 1/00, B60H 1/24, B60H 1/34, B60K 35/00, B60K 37/00

(54) **MOTOR VEHICLE COMPRISING AN IN-VEHICLE CLIMATE CONTROL DEVICE**
KRAFTFAHRZEUG UMFASSEND EINE FAHRZEUGINTERNE KLIMATISIERUNGSVORRICHTUNG
VÉHICULE COMPRENANT UN DISPOSITIF DE CLIMATISATION EMBARQUÉ

(43) Date of publication of application: 02.06.2021
(73) Proprietor: Audi AG, 85045 Ingolstadt (DE); LG Electronics Inc., Yoido-dong Seoul 150-721 (KR)
(72) Inventor: HÉLOT, Jacques, 85051 Ingolstadt (DE); MUELLER, Ulrich, 85055 Ingolstadt (DE); ROMAIN, Diboine, Seoul 409 (KR); KANG, Seungmo, Seoul 06668 (KR)
(74) Representative: Hofstetter, Schurack & Partner

(56) References cited:
- EP-A1- 3 495 178
- DE-A1-102016 216 543
- DE-A1-102016 220 671
- DE-T5-112016 001 504
- DE-U1-202014 007 673

## Description

The invention relates to a motor vehicle comprising an in-vehicle climate control device, in other words a climate control device that is constructed to adjust, for example, a temperature and/or a humidity in the motor vehicle.

A motor vehicle usually comprises a climate system with, e.g., air nozzles and operating elements, for example hardware interface parts and/or a display. Such climate systems are usually easily operated. In quite some cars, passengers in the rear can operate some functions like temperature and sometimes the draft, i.e. the ventilation strength.

It is, however, a disadvantage that only passengers sitting in the front are able to operate the climate system, and it is often not apparent what level of quality is achieved with the current settings of the climate system. A passenger needs to understand what, for example, a ventilation set on "grade 3" means, for example, if the air draft is strong or very strong, or on which quality level the air is purified. The passengers always need a certain experience with the specific climate system to be able to interpret the settings.

JP 2016-203669 A describes a duct pipe register which can be easily installed along, for example, a sealing part or a side wall part in a cabin and can blow air in a wide range in the cabin.

DE 10 2016 216543 A1 relates to an operating device for a comfort system of a motor vehicle, having a touch-sensitive screen with an operating surface.

DE 20 2014 007673 U1 describes a device for arrangement on an instrument panel in the interior of a motor vehicle, with - an input or display panel, - a holder that can be or is connected to the input or display panel for the movable arrangement of the input or display panel on the instrument panel, and - with at least one air vent arranged on the input or display panel.

DE 10 2016 220671 A1 refers to an air vent for a heating, ventilation or air conditioning system of a motor vehicle, the air vent having an air outlet opening over which at least one elongated lamella extends, into which at least one electrical or electronic display and / or control element of the heating, ventilation or air conditioning system of the motor vehicle is integrated.

DE 11 2016 001504 T5 describes a vehicle air conditioning display device used together with a vehicle air conditioning device comprising a display unit and a display controller.

EP 3 495 178 A1 describes a vehicle with a ventilation system to ventilate a cabin of the vehicle, wherein a duct of the ventilation system extends around the perimeter of the vehicle cabin.

It is an object of the invention to simplify operation of an in-vehicle climate control device in a motor vehicle.

The object is solved by the inventive motor vehicle and by the inventive method according to the independent claims. Advantageous embodiments are given by the dependent claims.

The invention is based on the idea to provide a motor vehicle with an in-vehicle climate control device comprising a display module whereby said display module is part of a vent element of the in-vehicle climate control device, and whereby said display module forms at least part of an outer wall of said vent element. In other words, the display module may, e.g., form a slit, nozzle, or plurality of nozzles, whereby said exemplary slit, nozzle, or plurality of nozzles is part of an air passage of a ventilation duct. The idea also comprises that the display module displays a graphical element that is an image, whereby said image represents a climate parameter setting, for example a current temperature or a current degree of air purification, or a temperature or air purification to be set.

In other words, the invention is based on the idea to combine a display with the vent element of the climate setting module, in other words to combine a display with the climate control device, in particular its climate setting module. Said inventive in-vehicle climate control device provides a quicker flow of information. In other words, a user may immediately understand an efficiency of a climate setting. In other words, the efficiency of the climate control device is well communicated.

The in-vehicle climate control device, or in-door climate control device of the vehicle, comprises a climate setting module for setting or adjusting at least one climate parameter inside the vehicle, for example a temperature or a humidity. Said climate setting module may be constructed as heating, ventilation and air conditioning ("HVAC") device for indoor and vehicular environmental comfort. Said climate setting module may, for example, be configured to set or adjust a temperature, in particular an air temperature, a humidity, and/or an air quality, for example a carbon dioxide content, and/or air purification.

Said climate setting module comprises a ventilation duct unit having a vent element, said ventilation duct unit forming an air passage for guiding air into the in-cabin room of the vehicle via the vent element. The vent element may, for example, be constructed as slit, or nozzle, or plurality of slits or nozzles.

The in-vehicle climate control device also comprises a display module, which extends from a front seat area to the back seat area of the motor vehicle's interior and that is contructed to display a graphical content by displaying graphical elements, whereby said display module at least partially forms an outer wall or an outer face of the vent element. In other words, said display module is arranged at the outer wall of the vent element, or forms at least a part of said outer wall. The outer wall is the side of the vent element facing the in-cabin room, whereby an inner wall is opposed to the outer wall of the vent element and is facing the air passage.

The in-vehicle climate control device comprises a control unit, whereby the control unit is a device or component or constructional element that is configured to receive signals, interpret and process said received signals, and to provide, in particular to generate, image signals. The control unit may, for example, be constructed as a control chip or a control device.

Said control unit is configured to determine a value of the at least one climate parameter being adjusted by the climate setting module, in other words to determine, as an example, a value of a current temperature or a temperature to be set. Preferably, the control unit is configured to determine a value of each of a plurality of climate parameters being set by the climate setting module.

The control unit is also configured to assign an image parameter to each climate parameter; determine a value of a said assigned image parameter depending on the determined value of the respective climate parameter to represent said determined value of said respective climate parameter; to provide an image signal describing a graphical element, said graphical element being an image representing said determined value of the climate parameter; and to transmit said provided image signal to the display module.

In other words, the control unit may, for example, be configured to determine a currently set temperature of 26 degrees Celsius (or a temperature of 26 degrees Celsius to be adjusted), to exemplarily assign the image parameter "colour" to the climate parameter, to determine the value "dark red" to the detected temperature of 26 degrees Celsius, to provide an image signal describing a dark red pattern, and sending the same to the display module in order to display said dark red pattern. In case the control unit also determines a value of an air vent currently set by the climate setting module, it may also determine a value describing a characteristic of a movement of said pattern or of an object. Such graphical content may, for example, show dark red arrows moving over the display's screen to represent the air flow and the temperature.

The above-mentioned advantages are yielded. In addition to that, the effect of the activity of the climate setting module is displayed in an emotional way, and also in a way for easy interpretation. A passenger may immediately gather the current settings of the climate setting module, and understand that, e.g., a comfortable warm climate with light air flow is provided. Additionally, an operating panel usually used by the passengers, for example one in a center console or a switch board, is separated from the climate control device as well as the air ventilation as such.

According to the invention, said control unit is configured to provide said image signal that describes an abstract image of a temperature, an air flow, an air quality, an air filter function, an air draft, and/or an air ionization function. In other words, not the numerical measured value of the at least one climate parameter is displayed, but an abstract representation thereof. Like this, the at least one climate parameter as being adjusted by the climate setting module is not sensed in a rational way by the user, but in a more emotional way and thus in way for more intuitive thus better interpretation. If, for example, the climate setting module is set to increase a temperature from 20°C to 26°C, a passenger may immediately gather from the abstract image displayed by the display module that, for example, an air flow may be getting warmer or if it is now being cooled down, even if the passenger does not know the numerical value of the initial or current temperature.

In a preferred embodiment, the display module may have at least two display areas to display the graphical content. In said embodiment, said control unit may be configured to determine, on the basis of an operating signal describing an operator control action for adjusting the at least one climate parameter, an area of the interior of the motor vehicle in which the at least one climate parameter is to be adjusted or set. For example, the control unit may be configured to determine that the operator control action is for adjusting a temperature in the back of the cabin. Said embodiment may also comprise that the provided image signal describes a displaying of the graphical element on a display area that is located in the determined area of the cabin. For example, the control unit may consequently provide an image signal that describes that the graphical element is to be displayed in the back of the cabin.

Optionally, said display module may additionally be configured to receive an operator control action, i.e. to detect said operator control action, preferably an operating gesture, most preferably a wipe gesture, for example a wiping pointing to or in direction to the back of the cabin. The display module may exemplarily be configured as touch-sensitive screen for said purpose. The control unit may be configured to determine, on the basis of said operating signal, the display area on which the operator control action was received, for example the display area that is located in the front of the cabin of the vehicle. The provided image signal may describe a shifting of the graphical element from the display area on which the operator control action was received to the display area that is located in the determined area of the cabin.

These embodiments do not demand a lot of attention of the user for performing said operator control action, yield a very playful way of setting of the climate parameter, and provide entertainment for, as an example, kids sitting in the back whereas the parents in the front set the climate for the kids in the back. The latter embodiment additionally yields that an operating panel usually used by the passengers, for example one in a center console or a switch board, is separated from an operating panel of the climate control device.

According to yet another embodiment, said control unit may be designed as a control module. Optionally, there may be, e.g., numbers and symbols that show the settings; and/or that may optionally be the controls or control means in addition to the graphical elements.

In yet another embodiment, the image parameter may be a contour of a graphical element to be displayed, and/or colour of the graphical element, and/or a colour gradient, and/or a flow direction, and/or a flow velocity. These image parameters are particularly helpful to create a descriptive abstract image of the climate parameter.

In a preferred embodiment, the outer wall of the vent element is formed by the display module, preferably entirely formed by the display module. In other embodiments, the display module may be spaced from an opening of the vent element by, for example, two to three centimeters.

The motor vehicle may be constructed as truck, passenger car or other motor vehicle.

According to the invention, said display module extends from a front seat area of the vehicle to the back seat area of the motor vehicle's interior, in other words it extends from the front of the cabin to the back of the cabin. This is particularly advantageous in combination with the above described in-vehicle climate control device that may have a control unit being configured to determine the display area on which the operator control action was received, and/or to determine an area of the interior of the motor vehicle in which the at least one climate parameter is to be adjusted.

Preferably, said display module of the motor vehicle may be arranged to frame or encircle the interior of the motor vehicle. In other words, said display module of the motor vehicle may be arranged along or at an inner wall of the cabin. In case that the display module is partially or even entirely framing the in-cabin room of the vehicle, the information displayed by the display module can be seen in the entire cabin, preferably the climate control device may be operated by every passenger.

The object is solved by a method to operate the in-vehicle climate control device of a motor vehicle according to any one of the embodiments of the inventive motor vehicle. Thereby, said control unit performs a determining of a value of the at least one climate parameter being adjusted by the climate setting module, preferably determining a value for each of a plurality of climate parameters. The control unit also performs an assigning of an image parameter to each climate parameter, a determining of a value of said assigned image parameter depending on the determined value of the respective climate parameter to represent said determined value of said respective climate parameter, providing an image signal describing a graphical element that is an image representing said determined value of the climate parameter, and transmitting said provided image signal to the display module. According to the inventive method, said image signal describes an abstract image of a temperature, an air flow, an air quality, an air filter function, an air draft and/or an air ionization function. The above-mentioned advantages arise here as well.

In a preferred embodiment of the method, wherein the display module may have at least two display areas to display the graphical content, the control unit may perform a determining, on the basis of an operating signal describing an operator control action for adjusting the at least one climate parameter, of an area of the interior of the motor vehicle in which the at least one climate parameter is to be adjusted or set. Thereby, the provided image signal may describe a displaying of the graphical element on a display area that is located in the determined area of the interior of the cabin. The respective advantages have already been discussed above.

Optionally, if the display module is configured to receive the operator control action said control unit may perform a determining, on the basis of said operating signal, of the display area on which the operator control action was received. Said gesture may, for example, be a touch gesture, e.g., by tipping or double tapping; preferably a wipe gesture is used. Thereby, the provided image signal may describe a shifting of the graphical element from the display area on which the operator control action was received to the display area that is located in the determined area of the cabin.

Preferably, the control unit may comprise a processing unit, said processing unit being constructed for electronic data processing, and said processing unit comprising at least one microprocessor and/or one microcontroller. Optionally, the control unit may comprise a data storage unit, for example a storage card or storage chip. Preferably, said data storage unit may comprise a program code, said program code being designed, when being processed by the processing unit, to cause the control unit to perform any one of the embodiments of the inventive method.

Further advantages and details of the present invention derive from the following description of a preferred embodiment as well as from the drawings. The features and feature combinations previously mentioned in the description as well as the features and feature combinations mentioned in the following description of the figures and/or shown in the figures alone may be employed not only in the respectively indicated combination but also in any other combination or taken alone without leaving the scope of the invention as defined by the appended claims.

In the following, examples of the invention are described. The figures show in:
- Fig. 1: a schematic illustration of a preferred embodiment of the method of the invention, and the devices of the invention, and
- Fig. 2: a schematic illustration of a further preferred embodiment of the method of the invention, and the devices of the invention.

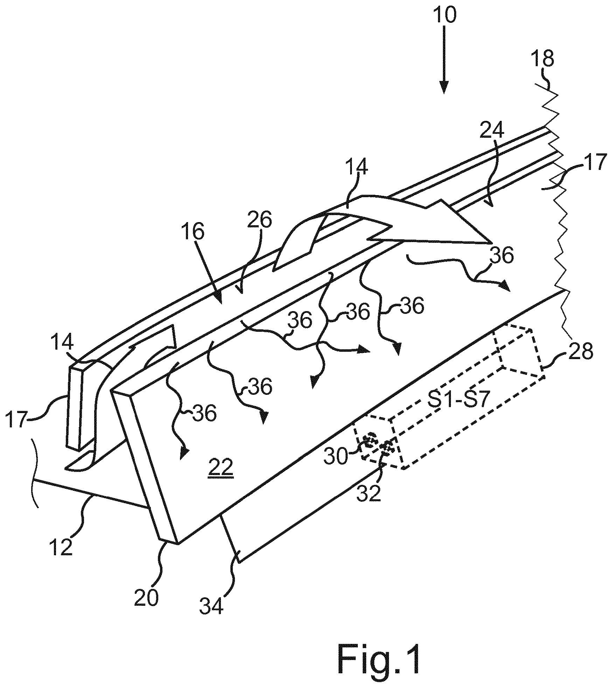

Fig. 1 shows an example of the in-vehicle climate control device 10 in order to explain the principle of the devices, and the method, described herein.

The in-vehicle climate control device 10 has a climate setting module 12 for adjusting, for example, a temperature, and/or air flow, an/or air purification setting. The climate setting module 12 may be a climate setting module 12 as known in prior art. In order to simplify Fig. 1, not all details of the climate setting module 12 are shown, for example a heating and/or a fan of climate setting module 12. As an example, the climate setting module 12 may currently provide settings for an air flow 14 as well as a temperature.

The air flow 14 is shown to flow through an air passage 16, which is formed by a ventilation duct unit 18. Said ventilation duct unit 18 may preferably comprise, as shown in the example of Fig. 1, at least one display module 20, which may preferably be, for example, an OLED-display, or an LCD-display, or an LED-matrix display or segmented LCD-display. In other words, a display area 22, which displays a graphical content, may preferably form an outer wall 24 of the vent element 17, which has an inner wall 26 forming the air passage 16.

Said display module 20 may preferably have a stripe-like or rectangular shape. In Fig. 1, only a portion of display module 20 is shown. Said display module 20 may optionally be arranged and/or formed on dashboard, door or part of a door. Display module 20 may optionally form the housing or part of the housing of the climate control device 10. Optionally, display module 20 may be clicked or glued onto a housing of the climate control device.

A control unit 28 may optionally comprise a processing unit 30 and/or a data storage 32. Optionally, control unit 28 may be configured to set the climate parameter, thus to control the climate setting module 12. The communication of control unit 28 with display module 20 may function via a data communication link 34, either a wire bound data communication link 34, e.g., a wire of a data bus, for example a CAN-bus; or a wireless data communication link 34, for example a Wifi-link or a bluetooth-link.

For example, the currently set climate parameter may be a temperature of, for example, 22 degrees Celsius, and another climate parameter currently set may be an air flow 14 with a predetermined flow velocity.

Control unit 28 may, for example, determine a value of 22 degrees Celsius (S1), and optionally a current setting of the air flow 14 (S1). For example, settings for respective image parameters may be stored in data storage 32, for example the image parameter "colour" for climate parameter "temperature", and the image parameter "flow direction" and/or "flow velocity" for climate parameter "air flow". By these predeterminations, the respective image parameter may be assigned for each of the currently set climate parameters (S2).

Respective values of each of the image parameters may be determined by reading a digital list of predetermined values (S3). Alternatively, the respective value of said assigned image parameter may be calculated for each the temperature of 22 degrees Celsius, and the specific air flow velocity. In the exemplary of Fig. 1, the colour value "light red", preferably in terms of a specific setting of LEDs of display module 20, may exemplary be assigned to the temperature of 22 degrees Celsius (S3). The air flow 14 may be represented, for example, by an abstract image, for example graphical elements 36 showing floating arrows, whereby a velocity of the floating or moving may depend on the currently set air flow setting. In other words, said graphical element 36 may preferably be an animation, thus in the context of the method described herein a "climate animation".

Optionally, different segments or areas of the display module 20 may show graphical elements 36 representing different climate parameters, for example air quality or temperature.

In step S4, control unit 28 may provide an image signal that describes a graphical element 36 describing an image of floating light red arrows as shown in Fig. 1, said arrows floating with the assigned velocity and having the assigned colour. In order to cause display module 20 to display said graphical element 36, the provided image signal is transmitted to display module 20 in S5.

Like this, according to the example of Fig. 1, display module 20 displays an abstract image of the currently set climate parameters.

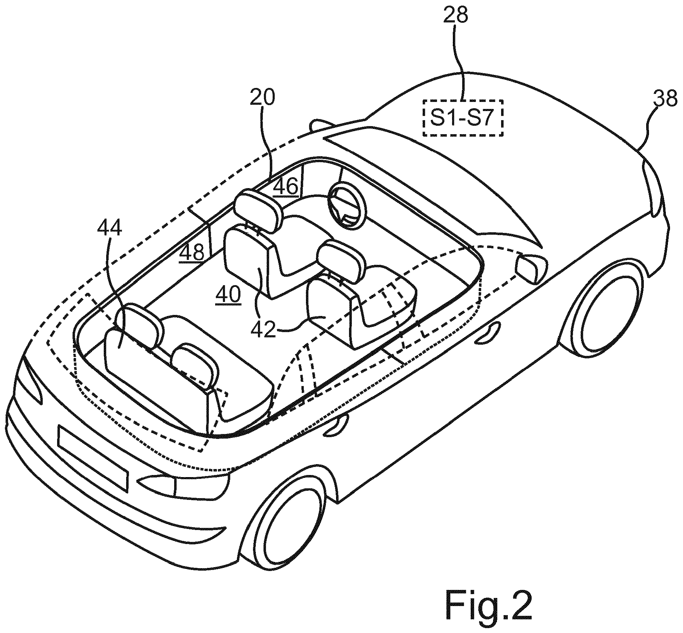

Fig. 2 shows an example of a motor vehicle 38, having an in-vehicle climate control device 10, which is, for the sake of better representation, not shown in Fig. 2. However, in-vehicle climate control device 10 of motor vehicle 38 of Fig. 2 may preferably be the one of Fig. 1. In the following, the additional optional features of in-vehicle climate control device 10 are mentioned only.

As can be seen in the example of Fig. 2, display module 20 may extend from a front area with front seats 42, and a back area with a back seat 44. Motor vehicle 38 of Fig. 2 has an in-vehicle climate control device 10 that has a display module 20 that may preferably be encircling of framing the inner cabin 40 of motor vehicle 38. Motor vehicle 38 of Fig. 2 is shown without a roof in order to better visualize display module 20. Said display module 20 of Fig. 2 may preferably form vent element 17, for example an air nozzle or a plurality of air nozzles, whereby also vent element 17 preferably encircles or frames cabin 40. In other words, Fig. 2 shows a vent element 17 stripe, and thus a stripe-like display module 20.

Preferably, said display module 20 may be arranged directly next to the part of the air passage where the air flow 14 enters the cabin 40. Alternatively, display module 20 may spaced apart from such air flow 14 outlet for about 0.1 centimeters to five centimeters, for example one centimeter, two centimeters, three centimeters, four centimeters or five centimeters.

Display module 20 may for example have a first display area 46 that is located in the front area of cabin 40, and another display area 48, which is located in the back area of cabin 40.

Preferably, said display module 20 may be configured to receive an operator control action, preferably by being configured as a touch-sensitive screen. Alternatively, said operator control action may be received or detected by a camera, for example if the operator control action is a gesture in the air. In the case of a touch-sensitive reception of an operator control action, said operator control action may preferably be a wipe gesture. In an example, a driver or other passenger sitting in the front area may set an increase of temperature and activate a fan may activate this setting and this functions for the back area by wiping a graphical element 36, for example an image of a button or a fan and an icon for said temperature in direction to the back area, where the children are sitting. Based on said received operation signal, control unit 28 may determine that said operator control action was received on display area 46 (S6), and that air temperature is to be adjusted in the back area (S7). The provided image signal that may, for example, be provided by generating said image signal, may describe the displaying of a fan in display area 48 only.

Fig. 2 shows an example in which the housing of display module 20 may preferably be part of the vent channel. From there, it may preferably be a complete loop in the interior, or partial. In one variant (not shown in Fig. 2), display module 20 may only be on the front like classical climate control. In another variant (not shown in Fig. 2), display module 20 may only be in the front and part of a door (or part of the doors). In yet another variant (not shown in Fig. 2), display module 20 may only be in the doors.

Altogether, the examples show how the invention provides, for example, an air nozzle or air nozzles with an integrated display for communication of, e.g., an efficiency of an air purification and the activity of the climate system.

In one example, the display module 20, in particular a display, may be used or arranged at or on a linear air outlet of the climate control device 10, e.g., an climate operating part or air purification device, that follows said line, preferably the entire line. On or along this line, the efficiency of the air purification may be displayed in an indirect graphical manner. Also, such device 10 or devices 10 may be operated using the display.

According to one technical implementation, a long and slim display may be implemented, preferably a display that is bent or curved.

## Claims

1. Motor vehicle (38) comprising an in-vehicle climate control device (10), said climate control device (10) comprising:
- a climate setting module (12) for adjusting at least one climate parameter inside the motor vehicle (38), said climate setting module (12) comprising a ventilation duct unit (18) having a vent element (17), said ventilation duct unit (18) forming an air passage for air from the inside (38) of the climate setting module (12) into the in-cabin room of the vehicle via the vent element (17),
- a display module (20) that is constructed to display a graphical content, whereby said display module (20) at least partially forms an outer wall (24) of the vent element (17),
- a control unit (28) that is configured to determine (S1) a value of the at least one climate parameter being adjusted by the climate setting module (12); assign (S2) an image parameter to each climate parameter; determine (S3) a value of said assigned image parameter depending on the determined value of the respective climate parameter to represent said determined value of said respective climate parameter; provide (S4) an image signal describing a graphical element (36), said graphical element (36) being an image representing said determined value of said respective climate parameter; and transmit (S5) said provided image signal to the display module (20), **characterised in that** said display module (20) extends from a front seat area to the back seat area of the motor vehicle's (38) interior, and said image is an abstract image of a temperature, an air flow (14), an air quality, an air filter function, an air draft, and/or an air ionization function.

2. Motor vehicle (38) according to claim 1, wherein the display module (20) has at least two display areas (46, 48) to display the graphical content;
said control unit (28) being configured to:
- determine (S7), on the basis of an operating signal describing an operator control action for adjusting the at least one climate parameter, an area of the interior of the motor vehicle (38) in which the at least one climate parameter is to be adjusted, whereby the provided image signal describes a displaying of the graphical element (36) on a display area (48) that is located in the determined area of the interior of the motor vehicle (38).

3. Motor vehicle (38) according to claim 2, said display module (20) being configured to receive the operator control action, preferably a wipe gesture; said control unit (28) being configured to:
- determine (S6), on the basis of said operating signal, the display area (46) on which the operator control action was received,
whereby the provided image signal describes a shifting of the graphical element (36) from the display area (46) on which the operator control action was received to the display area (48) that is located in the determined area of the interior of the motor vehicle (38).

4. Motor vehicle (38) according to any one of the preceding claims, wherein the image parameter is a contour of a graphical element (36) to be displayed, and/or a colour of the graphical element (36), and/or a color gradient, and/or a flow direction, and/or a flow velocity.

5. Motor vehicle (38) according to any one of the preceding claims, wherein the outer wall (24) of the vent element (17) is formed by the display module (20).

6. Motor vehicle (38) according to any one of the proceeding claims, wherein said display module (20) is arranged to frame the interior of the motor vehicle (38).

7. Method to operate the in-vehicle climate control device (10) of a motor vehicle (38) according to any one of claims 1 to 6, whereby the control unit (28) performs:
- determining (S1) a value of the at least one climate parameter being adjusted by the climate setting module (12),
- assigning (S2) an image parameter to each climate parameter,
- determining (S3) a value of said assigned image parameter depending on the determined value of the respective climate parameter to represent said determined value of said respective climate parameter,
- providing (S4) an image signal describing a graphical element (36) that is an image representing said determined value of said respective climate parameter, wherein said image is an abstract image of a temperature, an air flow (14), an air quality, an air filter function, an air draft, and/or an air ionization function, and
- transmitting (S5) said provided image signal to the display module (20).

8. Method according to claim 7, wherein the display module (20) has at least two display areas (46, 48) to display the graphical content; said control unit (28) performing:
- determining (S7), on the basis of an operating signal describing an operator control action for adjusting the at least one climate parameter, an area of the interior of the motor vehicle (38) in which the at least one climate parameter is to be adjusted,
whereby the provided image signal describes a displaying of the graphical element (36) on a display area (48) that is located in the determined area of the interior of the motor vehicle (38).

9. Method according to claim 8, said display module (20) being configured to receive the operator control action, preferably a wipe gesture; said control unit (28) performing:
- determining (S6), on the basis of said operating signal, the display area (46) on which the operator control action was received,
whereby the provided image signal describes a shifting of the graphical element (36) from the display area (46) on which the operator control action was received to the display area (48) that is located in the determined area of the interior of the motor vehicle (38).

## Patentansprüche

1. Kraftfahrzeug (38) mit einer fahrzeuginternen Klimasteuervorrichtung (10), wobei die Klimasteuervorrichtung (10) umfasst:
- ein Klimafestlegungsmodul (12) zum Einstellen mindestens eines Klimaparameters innerhalb des Kraftfahrzeugs (38), wobei das Klimafestlegungsmodul (12) eine Belüftungskanaleinheit (18) mit einem Lüftungselement (17) umfasst, wobei die Belüftungskanaleinheit (18) einen Luftdurchgang für Luft vom Inneren des Klimafestlegungsmoduls (12) in den Kabineninnenraum des Fahrzeugs (38) über das Lüftungselement (17) bildet,
- ein Anzeigemodul (20), das dazu konstruiert ist, graphischen Inhalt anzuzeigen, wobei das Anzeigemodul (20) zumindest teilweise eine Außenwand (24) des Lüftungselements (17) bildet,
- eine Steuereinheit (28), die dazu eingerichtet ist, einen Wert des mindestens einen Klimaparameters zu bestimmen (S1), der durch das Klimafestlegungsmodul (12) eingestellt wird; einen Bildparameter jedem Klimaparameter zuzuweisen (S2); einen Wert des zugewiesenen Bildparameters in Abhängigkeit von dem bestimmten Wert des jeweiligen Klimaparameters zu bestimmen (S3), um den bestimmten Wert des jeweiligen Klimaparameters darzustellen; ein Bildsignal, das ein graphisches Element (36) beschreibt, bereitzustellen (S4), wobei das graphische Element (36) ein Bild ist, das den bestimmten Wert des jeweiligen Klimaparameters darstellt; und das bereitgestellte Bildsignal zum Anzeigemodul (20) zu übertragen (S5), **dadurch gekennzeichnet, dass** das Anzeigemodul (20) sich von einem Vordersitzbereich zu einem Rücksitzbereich des Innenraums des Kraftfahrzeugs (38) erstreckt, und das Bild ein abstraktes Bild einer Temperatur, einer Luftströmung (14) einer Luftqualität, einer Luftfilterfunktion, eines Luftzugs und/oder einer Luftionisationsfunktion ist.

2. Kraftfahrzeug (38) nach Anspruch 1, wobei das Anzeigemodul (20) mindestens zwei Anzeigebereiche (46, 48) aufweist, um den graphischen Inhalt anzuzeigen;
wobei die Steuereinheit (28) dazu eingerichtet ist:
- auf der Basis eines Bediensignals, das eine Bedienpersonensteuerhandlung zum Einstellen des mindestens einen Klimaparameters beschreibt, einen Bereich des Innenraums des Kraftfahrzeugs (38) zu bestimmen (S7), in dem der mindestens eine Klimaparameter eingestellt werden soll,
wobei das bereitgestellte Bildsignal eine Anzeige des graphischen Elements (36) auf einem Anzeigebereich (48) beschreibt, der im bestimmten Bereich des Innenraums des Kraftfahrzeugs (38) angeordnet ist.

3. Kraftfahrzeug (38) nach Anspruch 2, wobei das Anzeigemodul (20) dazu eingerichtet ist, die Bedienpersonensteuerhandlung, vorzugsweise eine Wischgeste, zu empfangen; wobei die Steuereinheit (28) dazu eingerichtet ist:
- auf der Basis des Bediensignals den Anzeigebereich (46) zu bestimmen (S6), auf dem die Bedienpersonensteuerhandlung empfangen wurde, wobei das bereitgestellte Bildsignal eine Verschiebung des graphischen Elements (36) vom Anzeigebereich (46), auf dem die Bedienpersonensteuerhandlung empfangen wurde, zum Anzeigebereich (48), der im bestimmten Bereich des Innenraums des Kraftfahrzeugs (38) angeordnet ist, beschreibt.

4. Kraftfahrzeug (38) nach einem der vorangehenden Ansprüche, wobei der Bildparameter eine Kontur eines anzuzeigenden graphischen Elements (36) und/oder eine Farbe des graphischen Elements (36) und/oder ein Farbgradient und/oder eine Strömungsrichtung und/oder eine Strömungsgeschwindigkeit ist.

5. Kraftfahrzeug (38) nach einem der vorangehenden Ansprüche, wobei die Außenwand (24) des Lüftungselements (17) durch das Anzeigemodul (20) gebildet ist.

6. Kraftfahrzeug (38) nach einem der vorangehenden Ansprüche, wobei das Anzeigemodul (20) so angeordnet ist, dass es den Innenraum des Kraftfahrzeugs (38) umrahmt.

7. Verfahren zum Bedienen der fahrzeuginternen Klimasteuervorrichtung (10) eines Kraftfahrzeugs (38) nach einem der Ansprüche 1 bis 6, wobei die Steuereinheit (28) durchführt:
- Bestimmen (S1) eines Werts des mindestens einen Klimaparameters, der durch das Klimafestlegungsmodul (12) eingestellt wird, Zuweisen (S2) eines Bildparameters zu jedem Klimaparameter,
- Bestimmen (S3) eines Werts des zugewiesenen Bildparameters in Abhängigkeit von dem bestimmten Wert des jeweiligen Klimaparameters, um den bestimmten Wert des jeweiligen Klimaparameters darzustellen,
- Bereitstellen (S4) eines Bildsignals, das ein graphisches Element (36), das heißt ein Bild, das den bestimmten Wert des jeweiligen Klimaparameters darstellt, beschreibt, wobei das Bild ein abstraktes Bild einer Temperatur, einer Luftströmung (14), einer Luftqualität, einer Luftfilterfunktion, eines Luftzugs und/oder einer Luftionisationsfunktion ist, und
- Übertragen (S5) des bereitgestellten Bildsignals zum Anzeigemodul (20).

8. Verfahren nach Anspruch 7, wobei das Anzeigemodul (20) mindestens zwei Anzeigebereiche (46, 48) aufweist, um den graphischen Inhalt anzuzeigen; wobei die Steuereinheit (28) durchführt:
- auf der Basis eines Bediensignals, das eine Bedienpersonensteuerhandlung zum Einstellen des mindestens einen Klimaparameters beschreibt, Bestimmen (S7) eines Bereichs des Innenraums des Kraftfahrzeugs (38), in dem der mindestens eine Klimaparameter eingestellt werden soll,
wobei das bereitgestellte Bildsignal eine Anzeige des graphischen Elements (36) auf einem Anzeigebereich (48) beschreibt, der im bestimmten Bereich des Innenraums des Kraftfahrzeugs (38) angeordnet ist.

9. Verfahren nach Anspruch 8, wobei das Anzeigemodul (20) dazu eingerichtet ist, die Bedienpersonensteuerhandlung, vorzugsweise eine Wischgeste, zu empfangen; wobei die Steuereinheit (28) durchführt:
- auf der Basis des Bediensignals Bestimmen (S6) des Anzeigebereichs (46), auf dem die Bedienpersonensteuerhandlung empfangen wurde,
wobei das bereitgestellte Bildsignal eine Verschiebung des graphischen Elements (36) vom Anzeigebereich (46), auf dem die Bedienpersonensteuerhandlung empfangen wurde, zum Anzeigebereich (48), der im bestimmten Bereich des Innenraums des Kraftfahrzeugs (38) angeordnet ist, beschreibt.

## Revendications

1. Véhicule à moteur (38) comportant un dispositif de régulation d'ambiance embarqué (10), ledit dispositif de régulation d'ambiance (10) comportant :
- un module de réglage d'ambiance (12) pour régler au moins un paramètre d'ambiance à l'intérieur du véhicule à moteur (38), ledit module de réglage d'ambiance (12) comportant un bloc de conduit de ventilation (18) ayant un élément d'évent (17), ledit bloc de conduit de ventilation (18) formant un passage d'air de l'air partant de l'intérieur du module de réglage d'ambiance (12) dans l'habitacle du véhicule (38) via l'élément d'évent (17),
- un module d'affichage (20) qui est construit pour afficher un contenu graphique, en sorte que ledit module d'affichage (20) forme au moins partiellement une paroi extérieure (24) de l'élément d'évent (17),
- une unité de commande (28) qui est configurée pour déterminer (S1) une valeur du au moins un paramètre d'ambiance étant réglé par le module de réglage d'ambiance (12) ; attribuer (S2) un paramètre d'image à chaque paramètre d'ambiance ; déterminer (S3) une valeur dudit paramètre d'image attribué en fonction de la valeur déterminée du paramètre d'ambiance respectif pour représenter ladite valeur déterminée dudit paramètre d'ambiance respectif ; fournir (S4) un signal d'image décrivant un élément graphique (36), ledit élément graphique (36) étant une image représentant ladite valeur déterminée dudit paramètre d'ambiance respectif ; et transmettre (S5) ledit signal d'image fourni au module d'affichage (20), **caractérisé en ce que** ledit module d'affichage (20) s'étend depuis une zone de sièges avant jusqu'à la zone de sièges arrière de l'intérieur du véhicule à moteur (38), et ladite image est une image abstraite d'une température, d'un écoulement d'air (14), d'une qualité d'air, d'une fonction de filtration d'air, d'un tirage d'air et/ou d'une fonction d'ionisation.

2. Véhicule à moteur (38) selon la revendication 1, dans lequel le module d'affichage (20) a au moins deux zones d'affichage (46, 48) pour afficher le contenu graphique, ladite unité de commande (28) étant configurée pour :
- déterminer (S7), sur la base d'un signal de fonctionnement décrivant une action de commande d'opérateur pour régler le au moins un paramètre d'ambiance, une zone de l'intérieur du véhicule à moteur (38) dans laquelle le au moins un paramètre d'ambiance doit être réglé,
en sorte que le signal d'image fourni décrit un affichage de l'élément graphique (36) sur une zone d'affichage (48) qui est située dans la zone déterminée de l'intérieur du véhicule à moteur (38).

3. Véhicule à moteur (38) selon la revendication 2, ledit module d'affichage (20) étant configuré pour recevoir l'action de commande d'opérateur, de préférence un geste d'essuyage ; ladite unité de commande (28) étant configurée pour :
- déterminer (S6), sur la base dudit signal de fonctionnement, la zone d'affichage (46) sur laquelle l'action de commande d'opérateur a été reçue,
en sorte que le signal d'image fourni décrit un déplacement de l'élément graphique (36) à partir de la zone d'affichage (46) sur laquelle l'action de commande d'opérateur a été reçue, jusqu'à la zone d'affichage (48) qui est située dans la zone déterminée de l'intérieur du véhicule à moteur (38).

4. Véhicule à moteur (38) selon l'une quelconque des revendications précédentes, dans lequel le paramètre d'image est un contour d'un élément graphique (36) à afficher, et/ou une couleur de l'élément graphique (36) et/ou un gradient de couleur et/ou une direction d'écoulement et/ou une vitesse d'écoulement.

5. Véhicule à moteur (38) selon l'une quelconque des revendications précédentes, dans lequel la paroi extérieure (24) de l'élément d'évent (27) est formée par le module d'affichage (20).

6. Véhicule à moteur (38) selon l'une quelconque des revendications précédentes, dans lequel ledit module d'affichage (20) est disposé de manière à encadrer l'intérieur du véhicule à moteur (38).

7. Procédé pour faire fonctionner le dispositif de commande d'ambiance embarqué (10) d'un véhicule à moteur (38) selon l'une quelconque des revendications 1 à 6, en sorte que l'unité de commande (28) réalise :
- la détermination (S1) d'une valeur du au moins un paramètre d'ambiance étant réglé par le module de réglage d'ambiance (12),
- l'attribution (S2) d'un paramètre d'image à chaque paramètre d'ambiance,
- la détermination (S3) d'une valeur dudit paramètre d'image attribué en fonction de la valeur déterminée du paramètre d'ambiance respectif pour représenter ladite valeur déterminée dudit paramètre d'ambiance respectif,
- la fourniture (S4) d'un signal d'image décrivant un élément graphique (36) qui est une image représentant ladite valeur déterminée dudit paramètre d'ambiance respectif, ladite image étant une image abstraite d'une température, d'un écoulement d'air (14), d'une qualité d'air, d'une fonction de filtration d'air, d'un tirage d'air et/ou d'une fonction d'ionisation, et
- la transmission (S5) dudit signal d'image fourni au module d'affichage (20).

8. Procédé selon la revendication 7, dans lequel le module d'affichage (20) a au moins deux zones d'affichage (46, 48) pour afficher le contenu graphique ; ladite unité de commande (28) réalisant :
- la détermination (S7), sur la base d'un signal de fonctionnement décrivant une action de commande d'opérateur pour régler le au moins un paramètre d'ambiance, une zone de l'intérieur du véhicule à moteur (38) dans laquelle le au moins un paramètre d'ambiance doit être réglé,
en sorte que le signal d'image fourni décrit un affichage de l'élément graphique (36) sur une zone d'affichage (48) qui est située dans la zone déterminée de l'intérieur du véhicule à moteur (38).

9. Procédé selon la revendication 8, ledit module d'affichage (20) étant configuré pour recevoir l'action de commande d'opérateur, de préférence un geste d'essuyage ; ladite unité de commande (28) réalisant :
- la détermination (S6), sur la base dudit signal de fonctionnement, de la zone d'affichage (46) sur laquelle l'action de commande d'opérateur a été reçue,
en sorte que le signal d'image fourni décrit un déplacement de l'élément graphique (36) à partir de la zone d'affichage (46) sur laquelle l'action de commande d'opérateur a été reçue, jusqu'à la zone d'affichage (48) qui est située dans la zone déterminée de l'intérieur du véhicule à moteur (38).
